# EUROPEAN PATENT APPLICATION

(11) **EP 3 182 297 A1**
(43) Date of publication of application: **21.06.2017**
(21) Application number: 15307053.7
(22) Date of filing: 18.12.2015
(51) Int. Cl.: G06F 17/30

(54) **METHOD FOR GENERATING SEMANTIC DESCRIPTION OF TEXTUAL CONTENT AND APPARATUS PERFORMING THE SAME**

(71) Applicant: Thomson Licensing, 92130 Issy-les-Moulineaux (FR)
(72) Inventor: Glaeser, Frank, 30449 Hannover (DE); Weber, Michael, 30559 Hannover (DE); Jachalsky, Joern, 30974 Wennigsen (DE)
(74) Representative: Huchet, Anne

(57) **Abstract**

A method, a computer readable storage medium and an apparatus (20) for generating a semantic description of a textual content are described. A textual content and information about the characters in the textual content are received. The textual content are analysed to identify the structure of the textual content and to identify words and their semantic roles in the sentences in the textual content. A graphical representation of the textual content is generated. Each of the identified words of the textual content is represented as an item in the graphical representation, and the semantic roles of the words in the sentences of the textual content are represented by the connection of the items of the words in the graphical representation.

## Description

### TECHNICAL FIELD

The present disclosure relates to a method and an apparatus for generating semantic description of textual content, particularly using semantic parsing to generate a graphical representation of the textual content. In addition, a computer readable medium suitable used for such a method and an apparatus is also disclosed.

### BACKGROUND

Nowadays various types of content data such as video, audio, textual, user-related, etc., become more easily accessible and available, which lead to newly developed services that are required and desired by users. Since these data are operated in computers, electronic devices or the like, content descriptions or metadata which are machine-readable and provide comprehensive detailed information about the data are thus essential and helpful for the use of the data.

One practical example is the use of a movie content description, as a movie metadata, for movie search, comparison, recommendation, targeted advertising service, etc. A movie content description, e.g., a movie script, contains a lot of important information about the movie content and is the basis of the movie production process and the resulting film. For example, the movie script includes detailed description of what is happening in the individual scenes of the movie, the activities of the actors in the scenes, the spoken dialogues, etc. In general, the movie scripts have a common and uniform structure, which provides a solid basis to extract the content information from the scripts and simplify the exploitation of the content information.

However, the information that can be extracted from a textual metadata of an audiovisual data or other types of data is still not satisfied. For example, the challenge of generation of a semantic content description from the textual metadata such as a movie script is still unresolved.

In general, semantic parsing means to understand the sense of the words and their semantic roles in sentences in a textual content. For word sense disambiguation (WSD), various dictionary-based methods are available and can provide acceptable results, which use the knowledge encoded in lexical dictionaries for supervised machine learning to train a classifier or operator for a large corpus of manually annotated word sense examples. One example of a leading and mostly used lexical dictionary for English language is WordNet [I], which provides a database that contains 155,287 words organized in 117,659 synonym-sets for a total of 206,941 word-sense pairs. For example, IMS is a WSD-system implementation which provides a mapping of single words in a sentence to their WordNet sense [II]. Semantic role labeling is the detection of semantic arguments that can be interpreted in association with the predicate or verb in a sentence. There are several different semantic roles defined in theory to describe the semantic of a sentence. However, a reliable automatic recognition of all possible semantic roles in any sentence type is still an open problem in natural language processing.

Another valuable application of such semantic analysis of textual content is on personal diaries. Nowadays there are various applications that provide users the functionality to generate description texts about their daily activities and experience, especially using their mobile devices. Such applications can link the information of date, time, location, etc., to the text descriptions in the diary, and even link with pictures, videos, music or other data in the mobile device. The outcomes can be a huge number of valuable information which is normally sorted based on a timeline. Just as in scene descriptions of movie scripts, scenes from the personal life are described in the single individual entries in a personal diary. These items cover the current status of the writer and his participation on various events and activities.

However, the exploitation of this huge amount of personal information is still an open issue. Currently available search engines for diary tools on mobiles are working base on simple text-tags, which are mostly generated manually from the user itself. A text-tag based search provides insufficient results for more complex search requests. In other words, for the currently available applications, the valuable information is only indexed by the words when it is in the form of a textual description, without further detailed analysis or understanding about the content in the description.

### SUMMARY

The challenge of an automatic extraction of high level semantic content description from movie script is still unresolved. Especially, for the information extraction of an audiovisual data such as a movie, there is still a semantic gap between the information that can be extracted from the textual metadata of the audiovisual data and a possible interpretation of the movie content by an experienced operator. This is particularly true for high level semantic description such as behaviour and interactions of actors, characters, emotions, atmosphere, plot-points, etc. In other words, the automatic generation of a high level semantic content description for a movie or an audiovisual content is still desired and not satisfied.

Also, the valuable information included in the digital personal diary can be potentially used as a personal reminder assistant or a personal information database for the user. A comprehensive semantic analysis of the textual content of a diary description is thus desired and can lead to valuable use of the information included therein, such as automatic search, personal comment and suggestion.

Therefore, it is an object of the present principles to provide an improved solution to generate a semantic description of a textual content, for example a movie script or a personal textual diary.

The proposed principles realize a novel method for semantic parsing of such type of text descriptions and for generation of a representation of their content in form of a semantic graph. The method combines aggregation of necessary information from the structure of the text description and from external data sources with semantic analysis of the text description blocks. In one embodiment, all extracted information is transferred to RDF-triple with the objective of creation a semantic graph based representation of the content. Depending on the intended usage of the extracted information, different RDFS-schema could be used for RDF triple generation. According to one embodiment, a method for generating a semantic description of a textual content is proposed. The method comprises: receiving the textual content; receiving information about the characters in the textual content; identifying the structure of the textual content; identifying words and their semantic roles in the sentences in the textual content; and generating a graphical representation of the textual content. Each of the identified words of the textual content is represented as an item in the graphical representation, and the semantic roles of the words in the sentences of the textual content are represented by the connection of the items of the words in the graphical representation.

Particularly, identifying words and their semantic roles in the sentences in the textual content is based on the information about the characters in the textual content and the identified structure of the textual content.

In one embodiment, the method further comprises identifying the syntactic roles of the words in the sentences in the textual content.

In one embodiment, the words and their semantic roles and their syntactic roles in the sentences in the textual content are identified using a Natural Language Processing (NLP) tool, and the semantic roles of the words includes the grammatical dependencies among the words. In addition, generating the graphical representation of the textual content includes transferring the identified words and their semantic roles to a formality of RDF-Triple.

In one embodiment, the proposed approaches realize a novel method for semantic parsing of movie scripts. In a two-step process, the method starts with information extraction from the general structure of the scripts and then analyses the different types of text description blocks. All extracted information is transferred to RDF-triple with the objective of creation of a semantic graph based representation of the movie content. Here in the identified structure of the textual content includes the structure of the scenes of the movie script.

In one embodiment, the proposed method is applied on the textual content of a personal textual diary.

In one embodiment, a method for providing an interactive service for a textual using the described semantic description of the textual content is proposed. The method comprises receiving a user input including a query for the textual content; analysing the query and transferring the query to the formality of SPARQL; and matching the query and the graphical representation of the textual content to generate a response to the query. The query can be, for example, a searching query provides some criteria to search in the textual content, a summary query provides some instruction to ask for and generate a brief summary of the textual content, etc.

According to one embodiment, an apparatus for generating a semantic description of a textual content is introduced. The apparatus comprises a receiving unit, an analysis unit and an operation unit. The receiving unit is configured to receive a textual content and information about the characters in the textual content. The analysis unit is configured to identify the structure of the textual content and to identify words and their semantic roles in the sentences in the textual content. The operation unit is configured to generate a graphical representation of the textual content. Each of the identified words of the textual content is represented as an item in the graphical representation. The semantic roles of the words in the sentences of the textual content are represented by the connection of the items of the words in the graphical representation.

In one embodiment, the apparatus further comprises a storage unit configured to store the received textual content and the received information about the characters in the textual content.

Same or similar advantages, which have been mentioned with respect to the method according to the current principles, apply to the apparatus for generating a semantic description of a textual content.

Also, a computer readable storage medium has stored therein instructions for generating a semantic description of a textual content, which, when executed by a computer, cause the computer to: receive the textual content; receive information about the characters in the textual content; identify the structure of the textual content; identify words and their semantic roles in the sentences in the textual content; and generate a graphical representation of the textual content. Each of the identified words of the textual content is represented as an item in the graphical representation. The semantic roles of the words in the sentences of the textual content are represented by the connection of the items of the words in the graphical representation.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

Similar to the apparatus, same or similar advantages, which have been mentioned with respect to the method, also applied to the computer readable storage medium in the same or similar way and therefore not repeated.

Further characteristics of the present solution will become apparent from the description of the embodiments together with the claims and the included drawings. Embodiments can fulfill individual characteristics or a combination of several characteristics.

### BRIEF DESCRIPTION OF THE DRAWINGS

- Fig. 1: is a flow chart schematically illustrating one embodiment of a method for generating a semantic description of a textual content according to the present principles.
- Fig. 2: shows an exemplary data model of the information about a character in a textual content in one embodiment of the proposed method according to the present principles.
- Fig. 3: shows an example of a general structure of the graphical representation used to illustrate the structure of a textual content according to the present principles.
- Fig. 4: shows an exemplary simplified graphical representation of a textual content in one embodiment of the proposed method according to the present principles.
- Fig. 5: shows an exemplary graphical representation of a RDF data model for representing movie content information in one embodiment of the proposed method according to the present principles.
- Fig. 6: shows an exemplary graphical representation which identifies the relations among the scenes in a movie in one embodiment of the proposed method according to the present principles.
- Fig. 7: shows an exemplary page of a movie script used as an example in one embodiment of the proposed method according to the present principles.
- Fig. 8: shows an exemplary graphical representation of a part of the movie script shown in Fig. 4 as used in one embodiment of the propose method according to the present principles.
- Fig. 9: shows an exemplary visualized output of the Stanford CoreNLP tool applied to one sentence of the movie script shown in Fig. 4.
- Fig. 10: shows an exemplary graphical representation of the grammatical dependencies of the example sentence shown in Fig. 6.
- Fig. 11: shows an exemplary resulting graphical representation of a part of a movie script in one embodiment of the proposed method according to the present principles.
- Fig. 12: shows an application of one embodiment of the proposed method according to the present principles, where the textual content is a personal diary.
- Fig. 13: is a schematic diagram depicting one embodiment of an apparatus introduced in the present principles.

### DETAILED DESCRIPTION OF PREFERRED EMBODIMENTS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

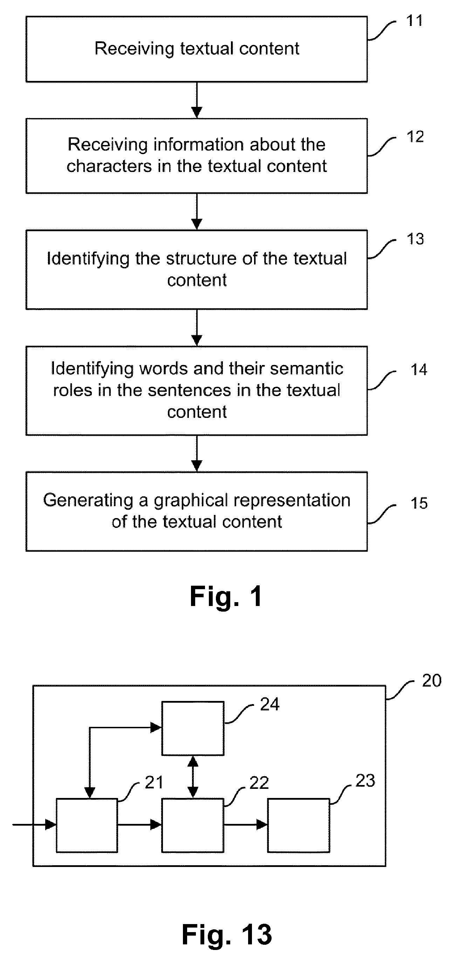

Fig. 1 shows one embodiment of the proposed method for generating a semantic description of a textual content. The method includes receiving 11 a textual content, receiving 12 information about the characters in the textual content, and analyzing the textual content to identify 13 the structure of the textual content and to identify 14 words and their semantic roles in the sentences in the textual content. In addition, the method includes generating 15 a graphical representation of the textual content. In the graphical representation, each of the identified words of the textual content is represented as an item, and the semantic roles of the words in the sentences of the textual content are represented by the connection of the items of the words.

The received textual content on which the proposed method is applied can be, for example, a movie script, a personal diary, etc. The characters in the textual content can be, for example, one or more persons in a movie script or a personal diary. The information about the characters in the textual content can be received 12, for example, together with the received textual content. Alternatively, the information about the characters in the textual content can be extracted from the received content using any feasible techniques.

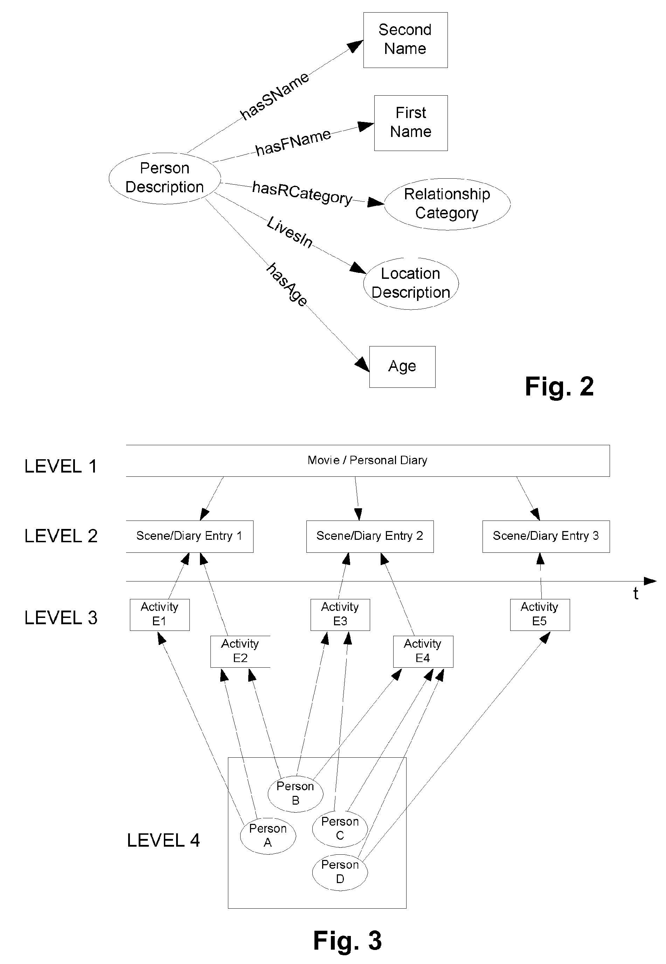

For example, Fig. 2 graphically illustrates the information about a character in the case when the textual content is a personal diary. In this case, the character information includes a name of a person, his/her relationships, locations, etc. In another case when the textual content is a movie script, the information about a character can be in the form of a list of actors. It should be noted that the data model of the character information can be represented differently depending on different applications and situations.

The textual content includes a semantic description having a general structure about status of characters, e.g., persons, and their participation on events and activities along a timeline in the textual content. The received textual content is analyzed to identify 13 the structure of the semantic descriptions of the textual content.

The structure of a textual content is preferably graphically represented in the embodiments of the proposed method. Fig. 3 shows an example of a general structure of the graphical representation that can used to illustrate the structure of an exemplary textual content. It shows an overview representation of the structure of a targeted semantic graph based representation of such a textual content. On bottom of the structure (Level 4) is a storage with objects that include information about all characters, e.g., persons, that are actors of interest in the text descriptions. In case of a movie script, these are all person that are acting in the movie. Here, the person objects include additional information like name, gender, actor name. In case of a diary, such person objects will be generated be reading the address book, which is for example available on the mobile device were the diary tool is running. Here, additional information like address or relationship (friend, family, business) is in focus of interest.

On top of the semantic representation (Level 1) is an object that covers the whole textual content (movie script or personal diary) itself and includes all the available common information about it. In case of a movie script, these are for instance the title, year of publication, etc. This information can be extracted from the script itself or external knowledge bases.
In the second level of the data model are objects that cover single scenes of the movie or single entries in the diary. This information is also extracted from the structure. Additional information that are stored here are location, time, weather, etc. These information are also automatically generated from the structure of the movie script (details will be described below), or from metadata of the diary service which are stored automatically with the text entry. For instance by using GPS data generated from the mobile device and by using online weather services. Level 3 of the exemplary structure includes semantic graph based descriptions that represents the events descripted in the scene description texts of the movie script, or in the text descriptions of the diary entries itself.

Subsequent to the identification 13 of the structure, the textual content is analyzed for realization of semantic substructures, especially for the respective parts in the Level 2 structure of the textual content as shown in Fig. 3. That is, the textual content is analyzed to identify 14 the words and their semantic roles in the textual content, especially focusing on the sentences that have the identified characters and/or locations, etc.

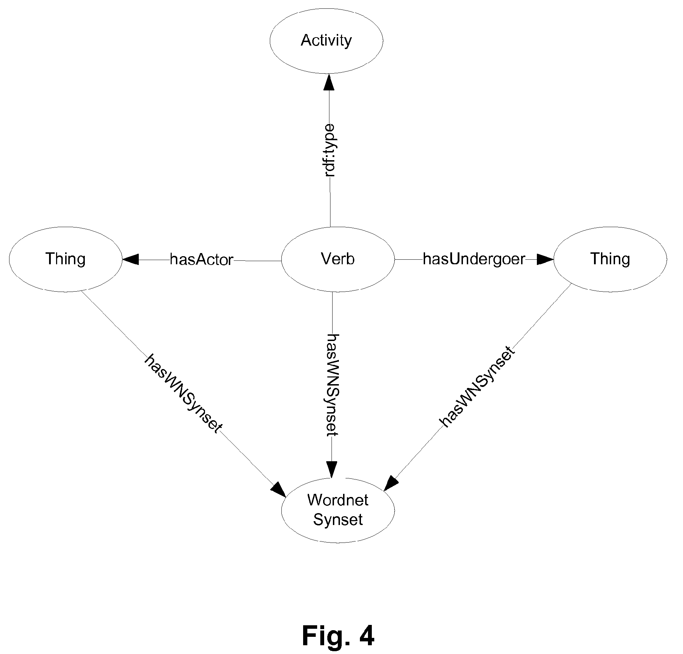

With the analysis of the words, sentences and their semantic roles in the textual content, graphical representations of the textual content can be generated 15 in relation to the identified semantic descriptions and their structures. Fig. 4 shows an exemplary simplified graphical representation of a single sentence in textual content, in which verbs are identified as activities, and synonym set of the verbs are also identified. Referring to Fig. 3, semantic relations to character objects (e.g., persons) and to objects of Level 2 data of the whole semantic representation of the textual content can then be realized.

In one embodiment, the proposed method is applied for generation of a universally usable and machine-readable and -process-able semantic description of a movie along its timeline. Accordingly, a movie script is received 11 and analyzed to identify 13, 14 the content in the script.

In this embodiment, to realize machine process-ability of the resulting semantic description of the movie script, the identified and extracted information, e.g., the structure of the script, words and their semantic roles in the script, and any other valuable information, from the movie script are stored in a Resource Description Framework (RDF) based data model. Using the RDF formality means that all identified content relevant facts, e.g., scenes, persons, objects or locations, are stored as objects, which are instances of the various classes of the pre-defined RDF data model. The objects are identified using a Universally Unique identifier (UUID). The relationships among the objects are described and stored in the formality of RDF-Triple, based on a set of relation types which are also part of the used RDF data model. It should be understood that, besides RDF data model, any other suitable or feasible data model can also be used for the application of the proposed method.

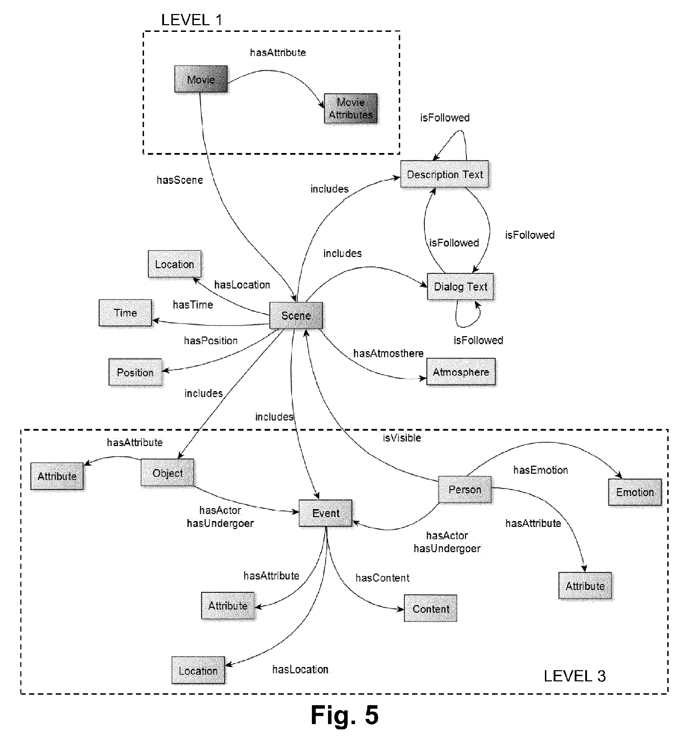

Fig. 5 shows an exemplary graphical representation of a RDF data model for representing and storing movie content information. The model includes various classes and the relations among the subjects of the classes. Each of the rectangles in Fig. 5 represents a class of the RDF data model, and the arrows show the possible relations between any two of the classes. The identifiers along with the arrows define the corresponding types of the relations. Referring to the general structure shown in Fig. 3, the "Movie" and "Movie Attributes" objects in Fig. 5 refers to Level 1 of the general structure. The "Scene" object is in Level 2. The "Event", "Person", "Object" and other objects are in Level 4, as indicated in the Figures in the dotted frame.

For a general movie script on which the RDF data model is applied, the data model includes the classes "Movie" and "Scene". For the class "Scene" there are multiple instances belong thereto, because generally there are several scenes in a movie. The class "Movie Attributes" is a simplification for multiple possible movie relevant attributes such as title, genre, length, film year, director, writer, etc. The class "Scene" relates to several relevant classes such as "Description Text", "Dialog text", "Atmosphere", "Location", "Time", "Position", "Person", "Event", "Object", etc., which describe various content information in the scenes.

Using the above described RDF data model, the embodiment of the proposed method for generating a semantic description of a movie textual script would be explained in detail below.

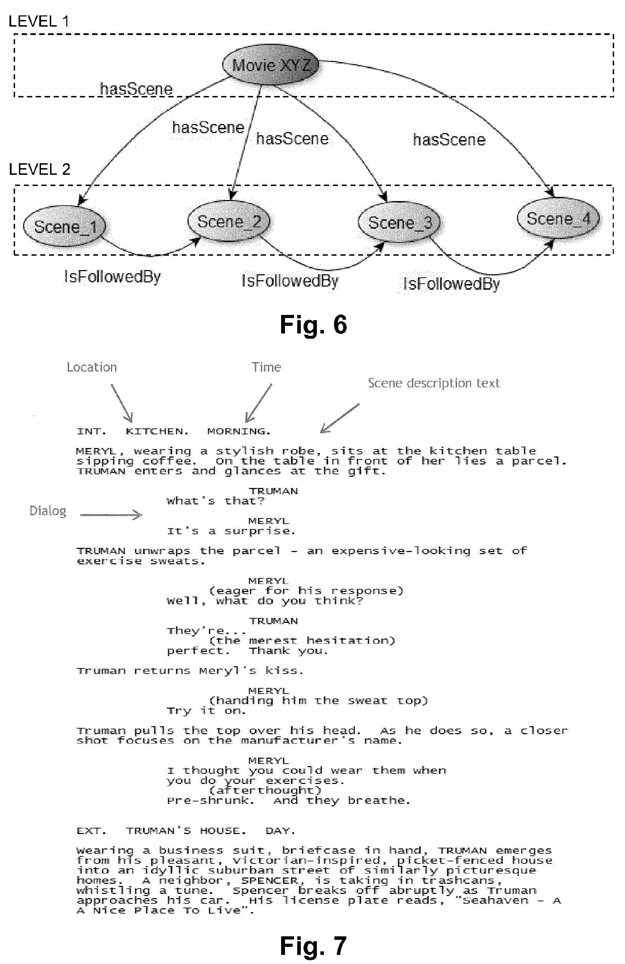

First, the movie script is analyzed to identify 13 the relations among the scenes in the movie. In generally, the scenes of a movie are connected to each other in their sequence along the movie timeline. This can be represented in an exemplary graphical representation as shown in Fig. 6. Referring to Fig. 3, the "Movie" object is in the Level 1 of the general structure, and the "Scene_1", "Scene_2", "Scene_3" and "Scene_4" objects are in the Level 2 of the general structure.

In generally, the movie scripts have a common layout and establish a similar or uniform structure. In order to meet the objective to fill the proposed RDF data model with all the necessary detailed information from a received movie script, the movie script is then analyzed to identify 13 a general script structure thereof.

Fig. 7 shows an exemplary page of a script of Scene 2 from the movie "Truman Show". It can be seen that the description of a movie scene starts with a heading that includes information about location and time of the scene, followed by a "description text" including everything that is visible and all the events that happens in the scenes. Often, this description text is interspersed with "dialog text" of the acting person. Each dialog starts with the name of the acting person, followed by his/her spoken text. The sequence of the description texts and the dialog texts corresponds to the timeline of the actions in the scenes.

With the digitalization of movie production chain nowadays, almost all of the movie scripts are available in the form of electronic documents, especially in XML formats, e.g., Open Screenplay format or Final Draft FDX-format. These XML formats make the movie scripts machine-readable and - interpretable, and can provide other useful information like scene, person and location lists.

A part of the proposed RDF data model can be filled out by simple evaluation of these XML formats. For example, referring to Fig. 5, the classes "Movie", "Movie Attributes", "Scene", "Location", "Time", "Position", "Description Text", "Dialog text" and "Atmosphere" and their relations with each other can be identified by a simple analysis of the script structure of the movie script. In addition, in the case of a movie script, it is also possible to identify most of the instances of the classes "Person" and "Event" from the type "Talk" by a simple evaluation of the dialog text of the movie script.

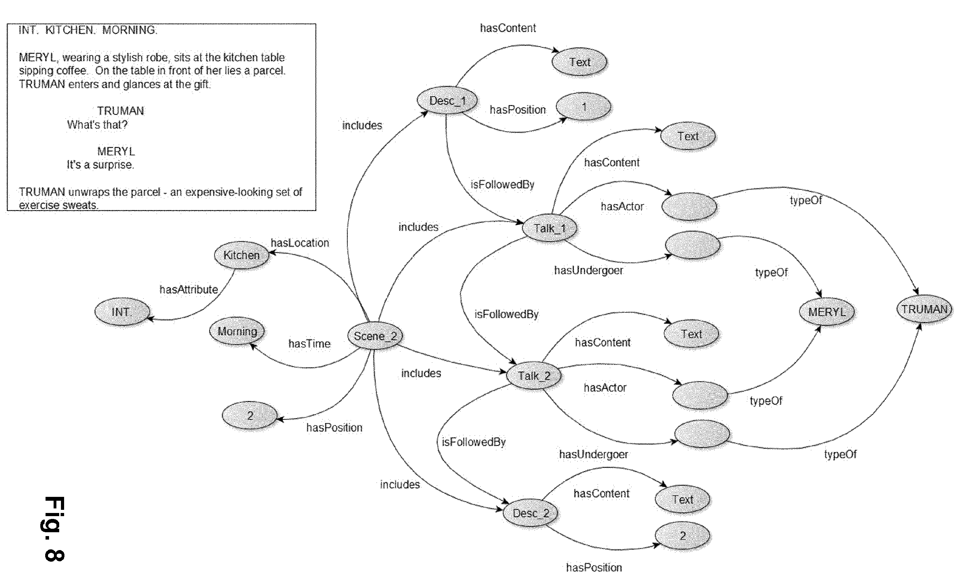

Accompanying the analysis of the general structure in the movie script, a graphical representation of the movie script can also be generated. Fig. 8 shows an exemplary graphical representation of a part of the movie script shown in Fig. 7. This graphical representation provides a semantic illustration and description of the corresponding script. In Fig. 8, each acting person is represented as an individual object instance of the class "Person" and can be identified with a unique UUID identifier, such as the acting persons "TRUMAN" and "MERYL". Referring to the general structure shown in Fig. 3, these person objects "MERYL" and "TRUMEN" are in the Level 4 of the structure. In every scene, where these two acting persons are visible, they can have different clothes, be involved in various dialogs, have different emotions, etc. To describe such constellations, the RDF data model provides the tool "Empty Nodes", which is used to attach various contexts to the same actor in various scenes of the movie.

With the analysis of the structure of the movie script, a lot of content information in the script can be identified. But an additional analysis of the description text and the dialog text of the script content is necessary in order to achieve a more detailed and robust semantic description of the movie script.

For a more sufficient realization of a semantic role labeling of the description content in a movie script, some related assumptions and simplifications are specified first. Referring to Fig. 7, as described above, a script of a movie scene generally has a uniform style with limited grammatical structures. The script normally includes "description text" and "dialog text". The "description text" refers to the sentences describing the background environment of a scene, specific situations in the story, or the appearance and behavior of the acting persons. It can be assumed that the sentences of the description text are active sentence, which are normally in present tense without other complicated grammatical structures such as questions.

The generation process of a graphical representation of the movie script, especially the description text thereof, focuses on the events described in the texts and the persons or objects that are involved in the events. For example, assuming the events in the description text are denoted by verbs, the subjects and the objects related to the verbs are thus considered participants of the events. This means, these verbs, subjects and objects have specific semantic roles in the description text of the movie script. In particular, the subject is defined to have the semantic role "Actor" in the movie script. It is preferred that only those sentences that are with known persons, object, or locations are analyzed and taken into account in the embodiments of the proposed method. For example, in the embodiment, those sentences with the structure of "verb-Actor-Undergoer" are analyzed.

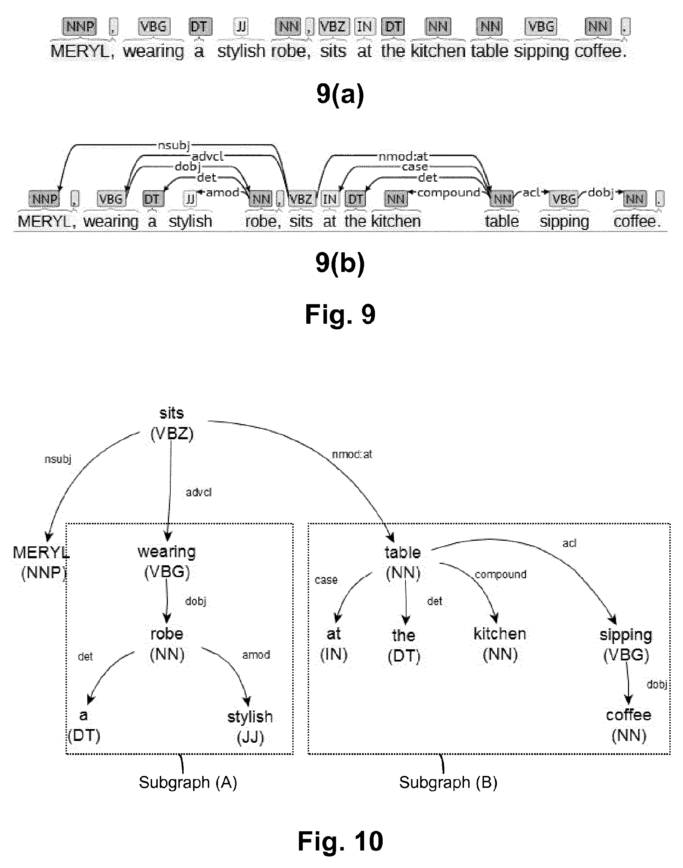

In the embodiment, the realization of the semantic role determination process of the description text of the movie script starts with a syntactic analysis using one of the available Natural Language Processing (NLP) tools, e.g., OpenNLP or Stanford CoreNLP. Fig. 9 shows an exemplary visualized output of the Stanford CoreNLP tool applied on one sentence of the movie script shown in Fig. 7. Fig. 9(a) illustrates the results of parts of speech (POS) detection to each word in the sentence, such as noun, verb, adjective, etc. Based on this, the verbs can be identified as the events in the sentence. Different POS-forms of the verbs are marked with the labels "VBG" or "VBZ" respectively. Fig. 9(b) shows the output of the grammatical dependency parser. Such a parser is able to detect various relationships between basis words and supplementary words that modify the basis words. The complete set of possible dependencies for the Stanford CoreNLP parser is described in detail in [III]. Corresponding to Fig. 9, Fig. 10 is a graphical representation of the grammatical dependencies of the example sentence, as supplied by the Stanford CoreNLP software library for processing in computer programs.

Applying the above described POS-information detection process on the words and sentences in a movie script, the grammatical dependencies among the words can be determined. In particular, the words can be identified and classified into one of the several classes used in a RDF data model as shown in Fig. 5, e.g., "Event", "Person" and "Object" and the sub-classes "Attribute" related to the classes.

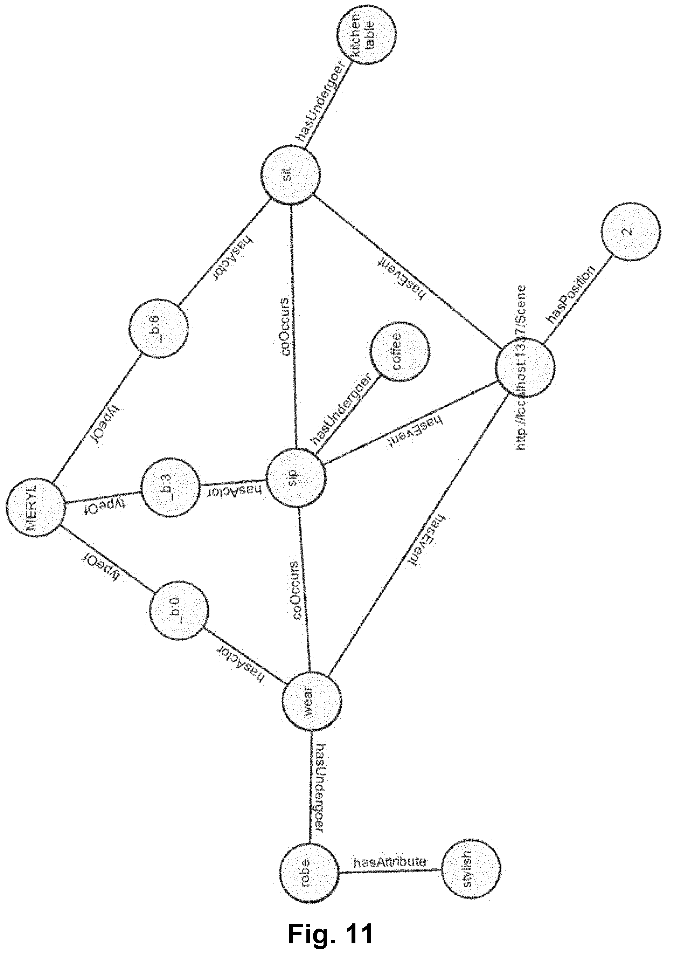

With the analysis of the movie script to identify 14 words and their semantic roles in the sentences in the movie script, a graphical representation of the movie script is generated 15 to semantically and graphically represent and illustrate the textual movie script. Hereinafter, the sentence
"MERYL, wearing a stylish robe, sits at the kitchen table sipping coffee."
is taken as a textual example for a simple and clear explanation about the generation of a graphical representation, and the resulting exemplary graphical representation of this sentence is shown in Fig. 11. It should be noted that the graphical representation of a movie script, which includes multiple and different sentences, can be generated in a similar process.

Referring to Figs. 9 and 10, the example sentence is first analyzed based on the Stanford CoreNLP tool, and the root element of the output dependency graph (Fig. 10) is evaluated. In this sentence, the root element is the verb "sits", which is identified as a first event. Applying to the RDF data model, the verb "sits" is then created as an instance of the class "Event" using the lemma of the word itself, which is accordingly represented as an item in the graphical representation in Fig. 11. As described above, the subject that belongs to the verb "sits" is identified to have the semantic role "Actor", which is the actor "MERYL" here. This actor "MERYL" is preferably already known from the list of acting persons of the movie script. In the example sentence, there is a relation between the verb "sits" and the subject "MERYL", which can be evaluated and regarded as a subject-relation and can be extracted as the following RDF-Triple:
Event ("sits") → has Actor → Person ("MERYL").

As shown in the dependency graph of Fig. 10, the subject "MERYL" is directly connected to the root word "sits", and is therefore considered as a first level relation. Similarly, all other first level relations in the dependency graph for the word "sits" are evaluated. This evaluation looks for various groups of grammatical relation-types and checks the depth of the graph of the words. If the graph-depth is more than one level, which means there are subgraphs behind the word, the subgraphs are evaluated subsequently. For example, for the example sentence, Fig. 10 shows two subgraphs indicated by the two square frames.

For the subgraph (A), the root word is the verb "wearing", which identifies and defines an additional event in the sentence. The semantic role "Undergoer" to the event is "robe", which is also the related object in the sentence. The "amod" relation in the subgraph describes that "stylish" is the adjective modifier of the noun "robe". Based on the fact that there is no additional subject in this subgraph, the known subject "MERYL" is thus considered valid here. Therefore, the following RDF-Triples can be extracted:
Event ("wear") → has Actor → Person("MERYL"),
Event ("wear") → has Undergoer → Object("rob"), Object ("rob") → has Attribute → Attribute("stylish"),
which are also graphically represented in the resulting graphical representation shown in Fig. 11 (see the items "wear", "robe", and "stylish").

For the other subgraph (B) of the dependency graph in Fig. 10, the root word is "table". Base on this word "table", the first level relations thereof are "case", "det" and "compound". The "compound" relation indicates that the noun "table" is composed of two words, namely "kitchen table". The case relation "at" together with the "nmod:at" relation between "sits" and "table" indicate that word "table" has the semantic role "Undergoer" for the Event "sits". Accordingly, the following RDF-Triple can be extracted:
Event ("sits") → has Undergoer → Object("kitchen table"),
which is similarly shown in the resulting graphical representation in Fig. 11.

The remaining subgraph consists of the verb "sipping" and the noun "coffee" connected by the "dobj" relation. The verb "sipping" defines an additional event in the sentence. The "dobj" relation together with the noun "coffee" indicates that the "coffee" has the semantic role "Undergoer" for the event instance "sip". In addition, "MERYL", the only subject in the example sentence, is still valid for this remaining subgraph and for the event "sits" and therefore has the semantic role "Actor" here. Accordingly, the following RDF-Triples can be extracted:
Event ("sip") → has Undergoer → Object("coffee"),
Event ("sip") → has Actor → Person("MERYL"),
which are also shown in the resulting graphical representation in Fig. 11.

Therefore, for the example sentence, "MERYL, wearing a stylish robe, sits at the kitchen table sipping coffee.", the resulting graphical representation according to the proposed method is shown in Fig. 11. It can be seen that the graphical representation includes the acting person in this sentence and his/her attributes, the events and objects and activities illustrated in this sentence, and the relations among the person, events and objects. When applying the proposed method to a more complicated textual content such as a complete movie script, a similar but much more complicated and more thorough graphical representation can be generated, which can illustrate more information and details such as a structural representation of the movie and the scenes, the scenes attributes, e.g., location, time and atmosphere, the multiple acting persons and their attributes and emotions, etc.

The proposed method for generating a semantic description of a textual content, e.g., a movie script in the above embodiment, has used a high percentage of the words and sentences in the textual content. The detection and identification of the semantic roles of the words in the textual content improves the quality of the resulting semantic description and the graphical representation. Optionally, this identification can also be performed with the use of automatic semantic role labeling systems available in the field, which utilize additional electronical dictionaries based on semantic frames like FrameNet.

In one embodiment, the proposed method is applied on a personal textual diary. As an exemplary situation, the method can be performed in a mobile device such as a mobile phone, which includes a textual diary and an address book of the user with other information and data.

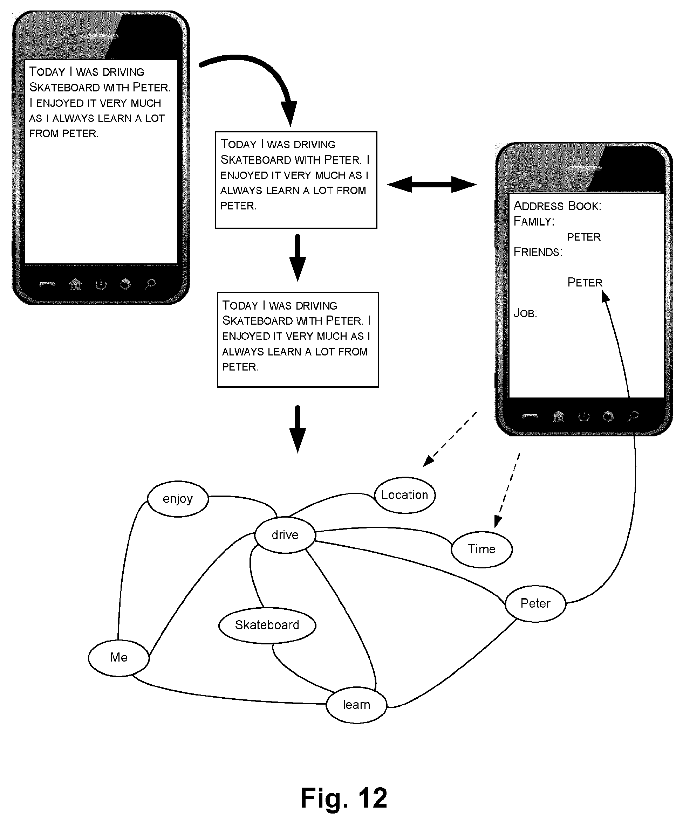

Accordingly, a textual diary is received 11 and analyzed to identify 13, 14 the content in the diary. As for a personal diary, it is preferred that the entity recognition is first performed to recognize and identify the names in the diary, so as to have the information about the characters, e.g., persons, in the personal diary. For example, this can be performed using the address book from the same user. In alternative, other external knowledge bases, e.g., group-memberships and metadata, can also be used to recognize the persons and names in the textual content of the diary. Similar to what are described above, the textual diary is then analyzed to identify 13 the structure of the textual diary, followed by being analyzed to identify 14 the words and their semantic roles and their syntactic roles in the sentence in the textual diary. For example, the words relates to locations, timelines, and any other information in the diary text. A graphical representation of the textual diary is then generated 15 to show the semantic description of the textual diary. Fig. 12 shows an exemplary diary sentence and the resulting graphical representation of the sentence. Of course, this figure shows only a simplified diary text in order to clearly and briefly illustrates the proposed method. It should be understood that a more complicated diary text can be used. In addition, enrichment can be added to the proposed method with additional information from known knowledge databases. For example, search and store synonyms for the noun and verbs found in the text description in systems like WordNet [I] can make the knowledge base more independent from the words used in the textual content of the textual diary. Search for the verbs found in the text descriptions in a system like Verbnet [IV] can be used to find a corresponding verb-group. Search and store links to entries in dbpedia [V] can help understand specific nouns or names of well-known people.

Furthermore, it is preferred that the proposed method further includes sentiment detection of the sentences in the textual diary to understand and use the information about the mood of user while he/she is writing the textual content of the diary. This can be performed with any available methods in the field. In addition, the textual diary, the information in the diary and the resulting semantic description of the diary can also be combined or linked to other available data in the mobile device, such as photos, videos, music files, etc.

With the proposed method to generate a semantic description of a textual diary of a user over a period of time, the text and the information from the diary can be used to build an extensive knowledge base about the user's life, including activities, contacts, preferences, etc. This knowledge can be used for various services, which either improve the usability of such a digital personal diary or provide the user with helpful information.

For example, a natural language based search interface can be built and utilized. The user can ask questions in natural language form. The text of the questions will be analyzed according to the concepts as in the proposed method and will be translated into a corresponding formality, e.g., a SPARQL-request, in order to get a valuable answer. Referring to the example shown in Fig. 12, the use can ask questions like:
- With whom do I have fun driving skateboard?
- What did I do with Peter the last time?
- Have I met Peter during the last year?
- From who have I learned driving skateboard?

The diversity of the possible type of questions shows the advantages of the interlinked representation of the content in form of a knowledge base. Using the technique as described in the proposed method, the search interface can also answer the questions based on indirect knowledge. For example, as the example in Fig. 9, the user can ask "Which one of my friends is sporty?" The answer will be "Peter", reasoned from the facts that driving skateboard is a sport and the user enjoyed it.

In addition, the interface can be set to automatically generate notices and suggestions. Sets of ruled can be predefined or user-defined to the interface, based on which the knowledge base is analyzed. Such roles can define a certain plan or intentions that a user has for certain areas of her/his life. Possible examples for such rules are:
- I want to meet my (close) friend at least twice a year.
- I would like to make sport twice a week.

When the application realizes a violation of one of these defined rules, it can automatically generate notices and make suggestions to the user.

Referring to Fig. 13, one exemplary embodiment of an apparatus 20 configured to generate a semantic description of a textual content is illustrated. The apparatus comprises a receiving unit 21, an analysis unit 22 and an operation unit 23. The receiving unit 21 is configured to receive the textual content and information about the characters in the textual content. The analysis unit 22 is configured to analyse the textual content to identify 13 the structure of the textual content and to identify 14 words and their semantic roles in the sentences in the textual content. The operation unit 23 is configured to generate a graphical representation of the textual content, wherein each of the identified words of the textual content is represented as an item in the graphical representation, and the semantic roles of the words in the sentences of the textual content are represented by the connection of the items of the words in the graphical representation. Optionally, the apparatus 20 further comprises a storage unit 24 configured to store the received textual content and the information about the characters in the textual content, from where the analysis unit 22 can retrieve and use the stored textual content.

In one embodiment, the analysis unit 22 is configured to analyse the textual content to identify the syntactic roles of the words in the sentences in the textual content.

In one embodiment, the analysis unit 22 identifies the structure of the textual content using a Resource Description Framework (RDF) based data model. In addition, the analysis unit 22 identifies the words and their semantic roles and their syntactic roles in the sentences in the textual content using a Natural Language Processing (NLP) tool. The semantic roles of the words include the grammatical dependencies among the words.

In one embodiment, the operation unit 23 is further configured to transfer the identified words and their semantic roles to a formality of RDF-Triple.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

### REFERENCES

[I] G. A. Miller, R. Beckwith, C. D. Fellbaum, D. Gross, K. Miller. 1990. WordNet: An online lexical database. Int. J. Lexicograph. 3, 4, pp. 235-244., or http://wordnet.princeton.edu/
[II] Zhi Zhong, Hwee Tou Ng, 2010. "It Makes Sense: A Wide-CoverageWord Sense Disambiguation System for Free Text". In Proceedings of the ACL 2010 System Demonstration, pages 78-83.
[III] Marie-Catherine de Marneffe, Christopher D. Manning "Stanford typed dependencies manual", http://nlp.stanford.edu/software/dependencies manua l.pdf
[IV] http://verbs.colorado.edu/-mpalmer/projects/verbn et.html
[V] http://dbpedia.org/

## Claims

1. A method for generating a semantic description of a textual content, the method comprising:
receiving (11) the textual content;
receiving (12) information about the characters in the textual content;
identifying (13) the structure of the textual content;
identifying (14) words and their semantic roles in the sentences in the textual content; and
generating (15) a graphical representation of the textual content, wherein each of the identified words of the textual content is represented as an item in the graphical representation, and the semantic roles of the words in the sentences of the textual content are represented by the connection of the items of the words in the graphical representation.

2. The method of claim 1, wherein identifying (14) words and their semantic roles in the sentences in the textual content is based on the information about the characters in the textual content and the identified structure of the textual content.

3. The method of claim 1 or 2, further comprising identifying the syntactic roles of the words in the sentences in the textual content.

4. The method of one of the preceding claims, wherein the words and their semantic roles and their syntactic roles in the sentences in the textual content are identified using a Natural Language Processing (NLP) tool, and the semantic roles of the words includes the grammatical dependencies among the words.

5. The method of one of the preceding claims, wherein generating (15) the graphical representation of the textual content includes transferring the identified words and their semantic roles to a formality of RDF-Triple.

6. The method of one of the preceding claims, wherein the textual content is a movie script, and the structure of the textual content includes the structure of the scenes of the movie script.

7. The method of one of the claims 1 to 5, wherein the textual content is a personal textual diary.

8. A method for providing an interactive service for a textual content using the semantic description of the textual content as claimed in claim 6, the method comprising:
receiving a user input including a query for the textual content;
analysing the query and transferring the query to the formality of SPARQL; and
matching the query and the graphical representation of the textual content to generate a response to the query.

9. An apparatus for generating a semantic description of a textual content, the apparatus comprising:
a receiving unit (21) configured to receive a textual content and information about the characters in the textual content;
an analysis unit (22) configured to identify the structure of the textual content and to identify words and their semantic roles in the sentences in the textual content; and
an operation unit (23) configured to generate a graphical representation of the textual content,
wherein each of the identified words of the textual content is represented as an item in the graphical representation, and the semantic roles of the words in the sentences of the textual content are represented by the connection of the items of the words in the graphical representation.

10. The apparatus of claim 9, wherein the analysis unit (22) is further configured to identify the syntactic roles of the words in the sentences in the textual content.

11. The apparatus of claim 9 or 10, wherein the analysis unit (22) identify the words and their semantic roles and their syntactic roles in the sentences in the textual content using a Natural Language Processing (NLP) tool, and the semantic roles of the words include the grammatical dependencies among the words.

12. The apparatus of one of claims 9 to 11, wherein the operation unit (23) is further configured to transfer the identified words and their semantic roles to a formality of RDF-Triple.

13. A computer readable storage medium having stored therein instructions for generating a semantic description of a textual content, which when executed by a computer, cause the computer to:
receive the textual content;
receive information about the characters in the textual content;
identify the structure of the textual content;
identify words and their semantic roles in the sentences in the textual content; and
generate a graphical representation of the textual content, wherein each of the identified words of the textual content is represented as an item in the graphical representation, and the semantic roles of the words in the sentences of the textual content are represented by the connection of the items of the words in the graphical representation.
